# EUROPEAN PATENT SPECIFICATION

(11) **EP 3 848 628 B1**
(45) Date of publication and mention of the grant of the patent: **19.06.2024**
(21) Application number: 21150608.4
(22) Date of filing: 07.01.2021
(51) Int. Cl.: F21S 43/239, F21S 43/245, F21S 43/20, F21S 43/50, B60R 1/12, B60R 13/04, B60Q 1/00, B60Q 1/26, B60Q 1/32, B60Q 1/50

(54) **A LIGHT EMITTING SYSTEM, A DESIGN ELEMENT, A REAR VIEW DEVICE, A COVERING DEVICE, AND A BODY COMPONENT OF A VEHICLE**
LICHTEMITTIERENDES SYSTEM, DESIGNELEMENT, RÜCKBLICKVORRICHTUNG, ABDECKVORRICHTUNG UND KAROSSERIETEIL EINES FAHRZEUGS
SYSTÈME ÉMETTEUR DE LUMIÈRE, ÉLÉMENT DE CONCEPTION, DISPOSITIF DE VISION ARRIÈRE, DISPOSITIF DE REVÊTEMENT ET COMPOSANT DE CARROSSERIE D'UN VÉHICULE

(30) Priority: 09.01.2020 US 202016738513
(43) Date of publication of application: 14.07.2021
(73) Proprietor: Motherson Innovations Company Limited, London EC2N 2AX (GB)
(72) Inventor: Nicholson, James, Lonsdale, SA 5160 (AU); Koehne, Shane Randell, Lonsdale, SA 5160 (AU); Edwards, Scott, Lonsdale, SA 5160 (AU); Belcher, Simon, Lonsdale, SA 5160 (AU); Messenger, Jacob Heath, Lonsdale, SA 5160 (AU); Chapman-Winter, Mathew, Lonsdale, SA 5160 (AU); Dekievit, Gary, Lonsdale, SA 5160 (AU); Field, Simon David, Lonsdale, SA 5160 (AU); Algurabi, Shahad, Lonsdale, SA 5160 (AU); Thoday, Sam, Hallett Cove, SA 5158 (AU); Caruso, Dean, Lonsdale, SA 5160 (AU); Bill, Frank, Lonsdale, SA 5160 (AU); Heib, Sascha Björn, Lonsdale, SA 5160 (AU); Herrmann, Andreas, 70327 Stuttgart (DE); Rötzer, Ilka, 95478 Kemnath (DE); Koller, Matthias, 70327 Stuttgart (DE)
(74) Representative: Weber-Bruls, Dorothée

(56) References cited:
- EP-A1- 3 228 501
- DE-A1-102015 205 630
- US-A1- 2009 257 241
- US-A1- 2013 130 674
- US-A1- 2019 176 692
- US-A1- 2019 323 676
- US-A1- 2019 324 362

## Description

The present invention relates to a light emitting system that may be used for vehicular light components. For example, a vehicle design element is selected from, for example, vehicle emblems, badges, logos and the like and/or other vehicular light components, such as in rear view mirrors. The system can provide a uniform light output without the light source being viewable. Mask methods for such systems, use of the system in a cover for the exterior and/or interior of an automobile, a body component of an automobile including such a system, and an automobile including such a system or a cover and/or body component of an automobile are also described.

Vehicles, such as passenger cars, vans and trucks, include various interior and exterior vehicular lighting components capable of emitting light for various purposes. To increase safety on the road, motor vehicles are known to have different lighting means, such as to illuminate the road area located in front of the vehicle, or to ensure the visibility of the motor vehicle by other road users by means of corresponding taillights. However, it has been found that the illumination means known from the prior art basically provide good security, but are not optimally suitable especially for the lateral illumination of the motor vehicle since, for example, there is often insufficient installation space for arranging conventional illumination means. In addition, previously known light sources are often less flexible in terms of individual design specifications and thus expensive to use when used in a variety of different models of motor vehicles.

Aesthetic features, which have become desirable in automotive applications, are to provide exterior and/or interior badges and/or emblems or the like on vehicles or specific parts of a vehicle. Such aesthetic features are backlighting of key features of the particular badge or emblem or are illuminated for optical or safety aspects. For example, parts or all of door finishers may be illuminated in such a way. It is desirable that these elements are backlit with an even (uniform or homogenous) luminance using, for example, light emitting diodes (LEDs) input. An LED is a directional light source having a relative luminous intensity that decreases as the viewing angle is increased. This may result in the appearance of bright or hot spots to an external viewer of the badge.

Lighting systems that provide a uniform luminous intensity are known such as systems using expensive organic light emitting diode (OLED) technology or complex lens and reflector arrangements. Highly diffusing materials are also used but these have the drawback of giving a milky or hazy appearance and have poor optical efficiency. Optic features may also be used on clear materials to diffuse light, but these have the drawback that the optic features are visible in the unlit state which is undesirable. A further desirable feature is that the LED input is not directly visible to the external viewer of the badge or emblem.

Typically, it is convenient and desired to hide any lighting means, i.e. so that the lighting means cannot be seen from the outside but only once the lighting means has been lit. Such a system is known as Hidden Till Lit (HTL) system. Metallic reflective coatings which provide such features are known from, for example, WO 2011/075796 and WO 2013/110122. Several problems arise from such HTL system known from the art, such as light bleed alongside walls of the lens, light piping and/or double imaging. In addition, these system may be less flexible. Also, known HTL systems require a plurality of separate elements causing complexity of design and assembly and increasing costs.

EP 3 228 501 A1 discloses a lighting device for an outer cover on a side of a vehicle, which comprises a light-emitting member, a photolith film with at least one graphic element, a partially opaque outer cover, light orientation means such that the light emitted by the at least one light-emitting member is reoriented towards an aperture in a structural panel, and in which the at least one light orientation means and the photolith film are housed in the interior volume between the housing and the aperture in the structural panel and are arranged parallel to and superimposed on one another. This ensures that the light emitted to the exterior is homogeneous, while complying with the technical approval requirements for the vehicle.

US 2013/130674 A1 discloses a door handle assembly for a door of a vehicle includes a handle portion and an illumination module. The handle portion is disposed at the vehicle door and movable to actuate a locking mechanism of the vehicle door to open the vehicle door. The illumination module includes at least one illumination source and an icon element and a cover element. The illumination source, when operated, backlights the icon element so that an icon of the icon element is viewable through the cover element at an exterior surface of the handle portion. The icon element includes a security icon and the illumination module is operable to backlight the security icon when a security system of the vehicle is operational.

US 2019/324362 A1 discloses a vehicle puddle lamp assembly is provided herein. The vehicle puddle lamp assembly includes a housing having a housing retainer. A light source is supported by the housing. A cover is removably coupled to a base portion of the housing. An optical member is disposed between the housing and the cover. The optical member may include an image filter thereon. The image filter is configured to form a desired image pattern on a surface proximate the housing.

US 2009/257241 A1 discloses a component of an actuatable apparatus including a substrate having an external surface defining a selected area, an illumination source actuatable between an illuminated state and a non-illuminated state, and an opaque indicia coating applied over the selected area. The illumination source is positioned behind the selected area. A portion of the opaque indicia coating defines a pattern having a greater light transmissivity than the portion of the opaque indicia coating not comprising the pattern. The pattern is invisible when the illumination source is in the non-illuminated state, and visible when the illumination source is in the illuminated state and transmits light through the pattern.

It is the object of the invention to provide a light emitting element overcoming the drawbacks of the prior art.

This object is solved by a light emitting element of claim 1, with preferred embodiments thereof being described in claims 2 to 10.

In one aspect, a light emitting system for a motor vehicle includes at least one light pipe; at least one light source, disposed at least partially within an interior of the system, wherein the at least one light source is configured to emit light based on at least receiving electrical power from an electrical power source, wherein the at least one light source being arranged adjacent to and directed towards the at least one light pipe at least one mask providing a desired pattern of illumination of the system, wherein the mask comprises faded marks which are suited to create intentionally brighter or duller areas obtaining a selective brightness to control illumination levels by both the light source and the mask; and a lens substantially enclosing the interior, the at least one light pipe and the at least one light source, the lens having an inner surface, an outer surface disposed opposite the inner surface and a continuous transparent and/or translucent coating on the outer surface, the mask being in direct contact to the coated lens, wherein with the at least one light source receiving electrical power from the electrical power source, the continuous transparent and/or translucent coating is at least partially permeable to at least some light which is emitted by the at least one light source and passed through the lens, and wherein the mask and the lens are separable.

The interior of the system, for example the light source, light guide etc., may be switchable between an on state and an off state, hidden until illumination is turned on so that the light produced in the inside the system can be seen from outside ("Hidden Till Lit" (HTL)). Thus, for example, any logo or emblem which was hidden may be visible only then.

This HTL feature of the system may be provided by a transparent and/or translucent coating applied to the lens, either on the outside or the inside. Preferably, the coating may be provided on the outside of the lens. Such transparent and/or translucent coating may be a coating that has a certain reflectivity so that, for example, the light source or light pipe cannot be seen from one side but that has also a certain degree of translucence so that the light from the light source and/or the light pipe can be seen once lit.

The at least one light source may be any light source that can be used to provide the required amount of light, either light of one color or lights of different color. At least one light source may be used, and two or more light sources may also be used . For example, if two or more light sources are used, each light source may provide light in a different color or in a different brightness.

The light source may be any suitable light source applicable for the intended purpose. In one embodiment, at least one LED lamp is used to illuminate at least one light pipe. Here, the at least one LED lamp could be arranged at one end of the light pipe, to radiate light into the light pipe. The light is then radiated away from the light pipe along the length of the light pipe. Preferably, two or more LED lamps are used, where for example at each end of the light pipe one LED lamp is located. The light source may provide light in different or changing colors.

The light source may include one or more LED's, one or more OLED's, a similar display technology, a surface lit plastic sheet, such as Acrylite^{®} (Evonik Industries), or any combination thereof. The at least one light source may be attached to a printed circuit board (PCB). The printed circuit board can include additional light sources, optionally positioned adjacent to light receiving surfaces to direct light into the light pipe. Generally, the light source may be hidden and cannot be seen from the outside. The at least one light source may be electrically-connected to the vehicle and is configured to emit light based on at least receiving electrical power from the vehicle, such as from an electrical power source (e.g. vehicle electrical system, battery, etc.) on the vehicle. As non-limiting examples, the at least one light source may be electrically-connected to the vehicle by way of one or more wiring harnesses or other suitable electrical connectors as may be understood by the skilled person.

The at least one light source may be arranged adjacent to and directed towards the light pipe. Other locations and directions of the light source are possible and within the skilled persons knowledge. The at least one light source, while unlit and emitting no light, may be advantageously concealed behind the transparent and/or translucent coating of the lens.

The light source may be a logo lamp or projector which functions as the mask.

The at least one light pipe may be a light pipe generally used in automotive applications. The light pipe may be substantially transparent and without any visible discrete optic features in an un-lit state, while being diffusive in a lit state. But the light pipe annulus can also be substantially transparent and non-diffusive in both a lit and un-lit state, while the circumferential flanges or cylinders are substantially transparent in an un-lit state, while being diffusive in a lit state.

The light pipe may include a clear polymeric material. The clear polymeric material may be selected from the group consisting of polyacrylate, such as poly(methyl methacrylate) (PMMA), polyester, polystyrene, polyethylene, polypropylene, polyamides, polycarbonate, epoxy, phenolic, acrylonitrile-butadiene-styrene, acrylonitrile-styrene-acrylates, acetal and blends of these. Preferred substrate materials include polycarbonate, poly(2,2'-dihydroxyphenylpropane) carbonate, polydiethyleneglycol bis(allylcarbonate), polymethylmethacrylate and polystyrene, or blends thereof. In one embodiment the light pipe is made from PMMA. Here, the term "light pipe" can be used to refer to a tubular structure that is adapted to transport light. Light might be coupled into the light pipe at one, or at both ends of the light pipe. The light is then being radiated from the light pipe along its length, or at least along part of its length.

At least one light pipe may be used in the system, and one, two, three, four, or more light pipes may also be used. In one embodiment, two light pipes are used.

In one embodiment, the at least one light pipe may be adapted to sequentially radiate the light from the at least one LED lamp. In the description, the term "sequentially" can be used to refer to a light sweep effect. For example, light might sweep from the center of the vehicle outwards to promote direction of travel, where the light has the appearance of a continuous even illumination. Therefore, the light pipe could include reflecting and/or diffusing elements for creating the light sweep effect.

In one embodiment, the housing behind the light guide may be shaped to promote reflection of light back into the adjacent environment.

In embodiments, the front surface of the lens is a polished, textured or machined surface. When the transparent and/or translucent coating is deposited on a polished, textured or machined substrate surface it provides a visible surface that is either a highly polished metal looking surface or a textured metal surface that replicates metal finishing, for example brushed stainless steel.

The lens may be made out of clear and/or translucent polymeric material. The polymeric material may be formed from a material selected from the group of polyacrylate, polyester, polystyrene, polyethylene, polypropylene, polyamides, polyamides, polycarbonate, epoxy, phenolic, acrylonitrile-butadiene-styrene, acrylonitrile-styrene-acrylates, acetal and blends of these, but is not limited thereto. For example, the lens may be formed from a material selected from the group of polycarbonate, poly(2,2'-dihydroxyphenylpropane) carbonate, polydiethyleneglycol bis(allyl carbonate), polymethylmethacrylate and polystyrene, or blends thereof.

The lens may have an outer component, preferably made from a clear material mentioned above, and an inner component, preferably over molded on the inner surface of the outer component and/or made from opaque material. The lens inner component material optic properties can be selected to additionally increase or decrease the reflected light back into the light pipe. A highly reflective material will increase the final light output level, a non-reflective material will reduce the overall final light output level.

The lens may be formed by any process known in the art, such as, for example, injection molding and/or thermoforming, but is not limited thereto.

The lens may include a pre-coated film in the form of either a hardcoat, a silicon hardcoat, an inorganic oxide, or a thin metal film, or a combination of such pre-coated films.

The transparent and/or translucent coating may be a coating that has a certain reflectivity so that, for example, the light source or light pipe cannot be seen from one side but that has also a certain degree of translucence so that the light from the light source and/or the light pipe can be seen once lit. The transparent and/or translucent coating may be any coating that provides the desired functionality. For example, the transparent and/or translucent coating may be a transparent and/or translucent metal layer formed from a metal, alloy or conductive metalloid selected from the group consisting of chromium, aluminum, titanium, nickel, molybdenum, zirconium, tungsten, niobium, tantalum, cobalt, manganese, silver, zinc, silicon, and mixtures thereof; an oxide, nitride, boride and/or carbide thereof and mixtures thereof, and/or alloys of any of the aforementioned metals, steel, stainless steel, or silicon. In one embodiment, the transparent and/or translucent coating is a chromium-based reflective coating, and both the polymeric substrate and the chromium-based reflective coating are at least in part permeable to light originating from the at least one light pipe.

For example, the transparent and/or translucent coating may be an alloy of chromium and a dopant material, the dopant material being selected from the hexagonally close-packed transition metals, the alloy having a crystal structure of a primary body-centered cubic phase in coexistence with a secondary omega hexagonally close-packed phase. The alloy may be a binary alloy of chromium and the dopant material.

The atomic percentage of the dopant material in the binary alloy may range from about 1.9 at. % to about 5.8 at. %. The dopant material may be selected from hexagonally close-packed transition metals zirconium, titanium, cobalt, hafnium, rubidium, yttrium and osmium. In one embodiment the dopant material may be selected from hexagonally close-packed transition metals zirconium, titanium and cobalt. For example, the alloy may be a binary alloy and the dopant material is zirconium where the atomic percentage of the zirconium in the binary alloy is in the range of from about 4.5 at. % to about 5.8 at. %. In a further embodiment, the alloy may be a binary alloy and the dopant material may be titanium, and where the atomic percentage of the titanium in the binary alloy is in the range of from about 1.9 at. % to about 5.8 at. %. In a still further embodiment, the alloy may be a binary alloy and the dopant material may be cobalt, where the atomic percentage of the cobalt in the binary alloy may be in the range of from about 1.9 at. % to 5.7 at. %.

The coating may have a thickness of 200 nm, 100 nm, be in the range of from 40 nm to 80 nm, be in the range of from 50 nm to 70 nm, or be about 60 nm, but is not limited to.

The coating may have a minimum light transmission of 5% to a maximum of 100%. In some embodiments, the light transmission of the coating is from 5% to 20%. The light transmission of the transparent and/or translucent coating may be 5%, 6%, 7%, 8%, 9%, 10%, 11 %, 12%, 13%, 14%, 15%, 16%, 17%, 18%, 19% or 20%. In specific embodiments, the light transmission of the transparent and/or translucent coating is about 8%. The transmission may depend on the coating used and thus can be adjusted.

The transparent and/or translucent coating may be part of a multilayer transparent and/or translucent stack on the front surface of the lens. The multilayer stack may include other layers such as hardcoat layers, and the like. For example, a hardcoat can be applied to the lens either on top of the transparent and/or translucent coating or between the lens and the transparent and/or translucent coating. The hardcoat may be formed from one or more abrasion resistant layers. As is known in the art, a primer layer may be used between the hardcoat and the lens or the transparent and/or translucent coating to enhance adhesion of the hardcoat. The hardcoat can be formed from one or more of a range of materials known for this purpose in the art, including an organo-silicon, an acrylic, a urethane, a melamine or an amorphous organosilicon (SiOₓC_{y}H_{z}). Organosilicon hard coats are particularly suitable and suitable materials include Silicone Hard Coat SHC 5020 from Momentive and GE587B from MomentiveGE Bayer. The hardcoat material may be applied in a solvent, such as an alcohol solvent. The hardcoat can be applied using any of the coating techniques known in the art, including flow coating, dip coating, spray coating, spin coating, etc. and then cured using techniques known in the art, such as heating to a temperature of about 100 °C to about 200 °C for the appropriate required period of time. Intermediate layers may be deposited between the respective layers of the multilayer stack. The intermediate layers may assist in adhesion between the respective layers and minimize or prevent delamination. The intermediate layers will generally be translucent and may be formed from silica.

The transparent and/or translucent coating can be deposited using any suitable elemental deposition technique, including Physical Vapor Deposition (PVD), Chemical Vapor Deposition (CVD), or the like.

For example, the lens may be positioned in one or more sputter deposition chambers with either planar or rotary magnetron targets, and with deposition of the transparent and/or translucent coating being achieved via DC sputtering from an elemental target. Other processes for applying or depositing coating layers can also be used. The thickness of the layer will determine the transparency and/or translucency of the layer. In one embodiment, a thickness of 2 nm to 50 nm provides a conductive transparent and/or translucent layer that allows sufficient light to pass through. A thickness of about 30 nm is particularly suitable.

In a not claimed embodiment the mask and the lens may be not interchangeable, such that the mask and the lens form a lens-mask system in which the mask and the lens are permanently fixed together:
- For example, the lens-mask system may be an in-mold decorative mask. The mask may include a resin sheet, a binder layer and an ink layer between the resin sheet and the binder layer. The ink layer and binder layer may form the stencil (pattern) which is then adhered to the resin sheet. The so-formed mask may be formed into a desired shape and subsequently molded with a clear resin that makes the lens in order to form the lens-mask system. Any molding technique may be used, for example injection-molding, but is not limited thereto. The described process may be done on either the inside or outside of the lens. In case the process is done on the outside of the lens, it has to be ensured that there will be no interference with the transparent and/or translucent coating which is applied to the lens. The mask may also extend to form an opaque layer around the edges of the leans to create an opaque housing that may eliminate light leakage.
- In an alternative, the lens-mask system may also be formed as one piece by 2K molding, wherein some parts of the lens-mask system may be translucent and other parts of the lens-mask system may not be translucent. The clear parts of the lens-mask system form the mask part. The clear parts may be additionally colored, for example by adding color pigments to further adapt the pattern provided by this system. With this setup light bleeding or double imaging problems are further limited or eliminated, As the mask is fixed, any problems that may arise with an unsecured mask are eliminated.
- In one embodiment, a paint and/or opaque material may be coated onto the lens to form the mask layer. The desired pattern may then be obtained by removing or etching parts of the additional coating. This may be done on either the outer side or the inner side of the lens. In one embodiment, the negative of the image may also be achieved by using a clear material and printing or lasering the negative image thereon. Removing or etching the additional coating may be done with any suitable method known to the skilled person. In one embodiment, the removal is achieved by use of a laser.

At least one gasket may be part of the system of a mask and a lens. The at least one gasket may be positioned between the at least one mask and the at least one light pipe. For example, the at least one gasket may be permanently fixed to the at least one mask. The at least one gasket may provide a window for the light to go through while preventing light bleed of the edges of that window. The at least one gasket may also be interchangeable so that windows of different size and form can be provided for the desired purpose, i.e. the desired light pattern.

The system includes at least one mask which provides and is responsible for the desired pattern of illumination of the system. Generally, the mask is a kind of a stencil that has translucent and non-translucent zones, so that only a specific pattern is illuminated once light from the light source and/or the light pipe is applied to the mask. The pattern may be printed or lasered onto the mask, wherein any printing technique may be used to prepare the desired pattern on the mask. The pattern or image is a dedicated part that the stencil is place on. For example, the mask includes an at least partially translucent image thereon.

The mask is interchangeable, such that the mask remains a separate element of the system and may be easily replaced to produce a different illuminated pattern. This has the advantage that the mask may be customized with low cost and minimum time. In other cases the mask may not be interchangeable, i.e. the mask may be permanently fixed to, for example, the lens so that it cannot be replaced.

The interchangeable mask preferably stretches along the entire size of the lens. This avoids any light bleed or light piping and also may avoid slippage of the mask within the inventive system, at least to a certain degree.

In one embodiment, the mask may be formed by molding an opaque material partly onto a clear material. The opaque material may serve as a gasket that is permanently fixed to the mask. Any suitable molding method may be used, such as a 2K molding of an opaque and clear material. A window of clear material will be formed in at least one region of the mask. The light from the light source and/or light pipe may pass only through this window of clear material, so that the image or pattern may be printed only onto this part of the mask. The opaque housing may additionally reduce any light bleed or light piping, in particular from the side wall of the lens.

The mask also includes faded marks. Faded marks are suited to intentionally create brighter or duller areas so that a selective brightness can be obtained. Thus, illumination levels may be controlled by both the light source and the mask.

Faded marks may be an etch, tint, additive or a combination thereof or any other suitable material that may diffuse or absorb light in brighter areas. Faded marks may be within the clear part of the stencil in order to emphasize a part of the mask, i.e. to have different light levels within the same image.

The additional coating may also include one or more laser additives. Such laser additives may react with the laser or an UV source to produce colored parts with a lens-mask system.

A transmissive coating may be located between the lens-mask system and the transparent and/or translucent coating. This transmissive coating may smooth the outer surface of the lens in case of using the above-mentioned additional coating to create the mask pattern. This improves applying the transparent and/or translucent coating on the outer side of the lens. The transmissive coating may also be applied to the inner side of the lens.

In another embodiment, the light pipe may be formed from a material having a high refractive index and the light pipe includes a coating with a material having a low refractive index, i.e. the refractive index is lower than that of the light pipe. The coating with the low refractive index provides a larger angle of refraction so that light is pushed back into the light pipe by total internal reflection. This causes the light to remain inside the light pipe rather than be scattered or absorbed by the surrounding material causing it to illuminate the light pipe for a longer distance. The low refractive index coating may include the same gaps and/or marks as given by the mask or the lens-mask system, i.e. the low refractive index coating and the mask or lens-mask may follow the same etch or print. In one embodiment the low refractive index coating may be a uniform coating and the mask is applied on top of this coating.

The mask of the system may also be formed by one or more of the light sources mentioned above, such as one or more LED's or one or more OLED's, but is not limited to. The light sources may provide an illuminated pattern that can be changeable and/or programmable. This may allow for colors and animations to be shown that may be, for example, a reflection of the state of the vehicle or similar. With this design no additional mask layer would be necessary.

In another embodiment, the mask may be formed by a light source, wherein the light source is a logo lamp or a projector or the like. The logo lamp or projector may be positioned behind the lens and the transparent and/or translucent coating. This design avoids the need of a large freeform mask to match the styling or design of the system.

According to various aspects and in examples, improved lighting of a motor vehicle and its surroundings is possible, while cost-effective production and the greatest possible freedom of design is possible.

For example, the system may be used as a vehicle design element, a rear view device of a vehicle or a covering device for specific parts of a motor vehicle in line with claims 11, 12 and 13 to 20, respectively.

The covering device includes: at least one form element produced and/or producible by injection molding with an inner side facing the motor vehicle and an outer side pointing away from the motor vehicle; at least one light pipe as defined above; one or more light sources as defined above, wherein the light source is arranged on the inside of the form element or at least connected to the inside and the form element covers the light source; at least one lens as defined above.

In one embodiment, at least a portion of the light emitted by the light source can pass through the form element and the lens outwardly in at least a first region of the covering device, wherein the form element is translucent at least in the first region and the lens is translucent at least in the first region or has a passage opening.

The passage opening in this case denotes a recess of any shape and size, which is suitable for allowing light from the light source/light pipe to pass through the lens. The passage opening may for example be designed as a hole in the lens. The recess may also designate a region in which the lens does not cover the form element. The term translucency denotes the at least partial transparency of the element and/or the lens. In this case, both elements can be completely or partially transparent, wherein the complete or partial transparency can also be present only in certain areas of the form element and/or the lens, while the other area can be made non-transparent, for example. The translucency may also designate a wavelength-dependent complete or partial transparency such that light of a wavelength or a limited wavelength range, for example the red green, yellow and/or blue wavelength range, may at least partially pass through the form element and/or the lens.

Depending on the application, in addition to the definition above, the light source/light pipe can be embodied as a point light source, as a surface radiator or as a planar or linear arrangement of a plurality of light sources. In the case of a multiplicity of light sources/light pipes, the light of the light sources/light pipes can overlap or pass through the lens in parallel to one another for illuminating a larger area, for example of the lens.

As the light source/light pipe is arranged on the inside of the form element or at least connected to the inside and the form element covers the light source/light pipe, it is robustly protected from external influences.

It is also provided that the translucency of the covering device and/or the lens in the first region can be adjusted by injection molding and/or different translucencies can be introduced by injection molding.

The covering device can be provided as a single covering device or composed of several separate covering devices for forming a common multi-part covering device for attachment to several separate areas of the motor vehicle, wherein in the case of multi-part covering the individual separate covering devices are provided for attachment to mutually movable areas of the motor vehicle so that the mobility of these areas is not hindered by the covering devices.

The covering device may include one display means, for example at least one emblem. It is also preferred that such display means is arranged at least partially in a first region, that the display means is at least partially translucent, in particular transparent, is configured and arranged at least in the first region. Here, the cover at least partially cover the display element.

In one embodiment, the light source/light pipe includes at least one display device, preferably at least one monitor, in particular LCD monitor, for displaying at least one display, preferably a logo and/or an emblem. It can also be provided that the light source/light pipe has at least one projection device for projecting at least one information, preferably a logo, on at least one surface and/or a light source, in particular a floor lamp and/or a puddle lamp, for illuminating at least one surface, in particular at least one region of the soil.

Furthermore, the light source/light pipe is intended
(i) to display different colors as a multicolor illumination device
(ii) to play and/or display several images,
(iii) to display user-related advertisements, in particular conveyed by key-specific information.

Furthermore, it can be advantageous that the covering device includes a multiplicity of light pipes, wherein at least a first of the light pipes distributes light to at least one of the first areas and at least a second of the light pipes distributes light to at least one other first area. In further embodiments, additional light pipes may distribute light from at least two of the plurality of light sources to the first region or further of the light pipes distribute light from further light sources to further first regions.

According to a further aspect, a body component for a motor vehicle includes at least one covering device. With such a covering device not only the corresponding body areas can be covered, but also optionally spot welds are laminated on the body component. The same applies to adhesive dots or seals that are to be covered.

The invention also refers to a motor vehicle with a covering device on the invention, in line with claims 21 and 22.

In one embodiment, the covering device is arranged as a one-piece covering device or as a multi-part covering device consisting of several separate parts of the motor vehicle, wherein in the case of a multi-part covering device, the individual parts are arranged on mutually movable regions of the motor vehicle. Movable areas of the motor vehicle are, for example, different doors or the respective doors to the adjacent A, B or S pillars of the motor vehicle or the roof of the motor vehicle. The same applies to movable lids, flaps, trunk doors or flaps to the surrounding motor vehicle areas. In multi-part covering devices, the light sources/light pipes are supplied separately from each other with power, each part of the cover can be supplied as already described for the above one-piece cover or connected to other circuits, such as the turn signal, door light, etc.

In another embodiment, the one-piece covering device covers a door area, preferably from one pillar part to the other pillar part of the same door area, or covers at least a portion of the roof of the motor vehicle above the door area as a roof trim strip or roof cover. In this case, the roof covering or the roof trim strip may extend continuously from a position in the region of an A pillar of the motor vehicle to at least one position in the region of a C pillar of the motor vehicle.

In another embodiment, the one-piece covering device is arranged as a spoiler in the roof area or in the region of a rear window or in the region of a vehicle rear. Here, the spoiler may extend from one side of the motor vehicle to the other side of the motor vehicle.

In a further embodiment, the multi-part covering device extends laterally on the motor vehicle over different door regions. This may, for example, extend from a position in the region of the A-pillar to a position in the region of the C-pillar. In one embodiment, the multi-part covering device is arranged as a door shaft strip.

The terms "in the area of the A-pillar, the C-pillar, the roof, the rear window, the rear of the vehicle" denote that the covering device of a location on the A-pillar, C-pillar, the roof, the rear window, the vehicle extends back to the other corresponding locations or that the cover at least adjacent thereto.

This specific embodiment can already be achieved in the production of the form element by appropriate consideration in the injection molding process. In addition, as an alternative or in addition, the lens also makes it possible to adjust the transmission properties in the first region, provided that the lens completely or partially covers the first region. As a result, a change in the light emerging from the covering device can be achieved even in the case of covering devices with the same shaped element only by varying the covering element. This is therefore particularly advantageous for individual adjustments of the covering device.

By using the system, the transmission properties of the light can be advantageously set. In addition, therefore, a uniform outer appearance is feasible, so that other road users are not distracted unnecessary. Thus, light sources, behind the transparent and/or translucent coating, can be arranged. As a result, an emblem and/or logo is visible only after the activation of the system.

Alternatively or additionally, the system can illuminate a surface, for example, the area in front of the motor vehicle to increase safety for the vehicle occupants when entering the motor vehicle or increase safety for other road users.

According to various aspects and in examples, the light sources can not only be arranged within the vehicle at fixed locations, but there is the possibility to provide the light sources at any position on the outside of a motor vehicle.

The foregoing summary, as well as the following detailed description, will be better understood when read in conjunction with the appended drawings. For the purpose of illustration, there is shown in the drawings certain embodiments of the present invention.

It should be understood, however, that the invention is not limited to the precise arrangements and instrumentalities shown. The accompanying drawings, which are incorporated in and constitute a part of this specification, illustrate an implementation of systems and apparatuses consistent with the present invention and, together with the description, serve to explain advantages and principles consistent with the invention.
- FIG. 1: is a schematic view of an embodiment of the system.
- FIG. 2: is an embodiment of the mask with an image or stencil thereon.
- FIG. 3: is an embodiment of a coated lens with the respective mask.
- FIG. 4: is an embodiment of a 2K molded mask window.
- FIG. 5: is a schematic representation of the preparation of a lens-mask system not claimed by the present invention.
- FIG. 6: is a schematic representation of 2 K molded lens-mask system with tinted parts not claimed by the present invention.
- FIGS. 7 and 8: are embodiments for laser etching the mask with or without additional transmissive coating not claimed by the present invention.
- FIGS. 9 and 10: are schematic views of the inventive HTL system having an additional coating with a low refractive index.
- FIG. 11: is a schematic representation of an embodiment of the invention having optic shapes on the mask.
- FIG. 12: is a schematic representation of an embodiment with an projector as the mask not claimed by the present invention.
- FIG. 13: is a schematic representation of a motor vehicle with an inventive covering device according to a first embodiment.
- FIG. 14: is a schematic representation of a motor vehicle with an inventive covering device according to a further embodiment.
- FIG. 15: is a schematic representation of a motor vehicle of an inventive covering device according to a further embodiment.
- FIG. 16: is a schematic cross-section view of an inventive covering device in a further embodiment not claimed by the present invention.
- FIG. 17: is an embodiment of the inventive covering device in a side view not claimed by the present invention.
- FIG. 18: is a further embodiment of the covering device in a side view not claimed by the present invention.

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

It is to be understood that the phraseology and terminology employed herein are for the purpose of description and should not be regarded as limiting. For example, the use of a singular term, such as, "a" is not intended as limiting of the number of items. Also the use of relational terms, such as but not limited to, "top," "bottom," "left," "right," "upper," "lower," "down," "up," "side," are used in the description for clarity and are not intended to limit the scope of the invention or the appended claims. Further, it should be understood that any one of the features can be used separately or in combination with other features. Other systems, methods, features, and advantages of the invention will be or become apparent to one with skill in the art upon examination of the detailed description. It is intended that all such additional systems, methods, features, and advantages be included within this description, be within the scope of the present invention, and be protected by the accompanying claims.

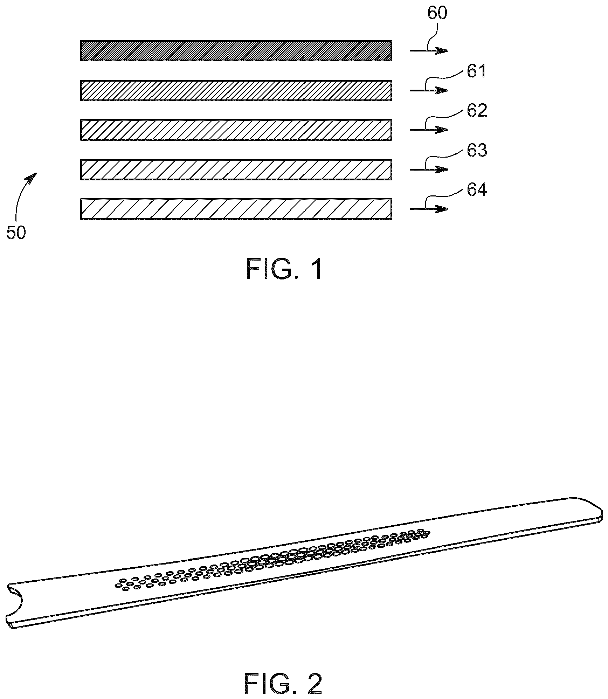

FIG. 1 is a schematic representation of an embodiment of a system 50. A light source 64 is located adjacent to a light pipe 63. A mask 61 in direct contact to the coated lens 60 provides for the illuminated pattern. In this embodiment, a gasket 62 is located between the mask 61 and the light pipe 63.

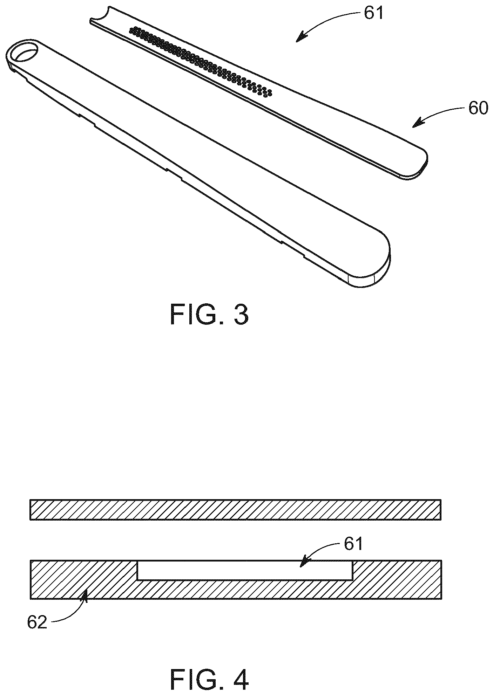

FIG. 2 is a representation of the mask used in the system 50. The mask 61 has a specific form which is necessitated by the form of the lens (not shown; see Figure 3). An image or stencil is printed on the mask 61 so that a specific illuminated pattern can be seen once light from the light pipe (not shown) passes the mask 61.

FIG. 3 shows the mask 61 of FIG. 2 and the respectively coated lens 60.

FIG. 4 is an embodiment of a 2K molded mask window. The mask 61 is in the form of a central window, whereas an opaque material has been molded to form a gasket 62 structure.

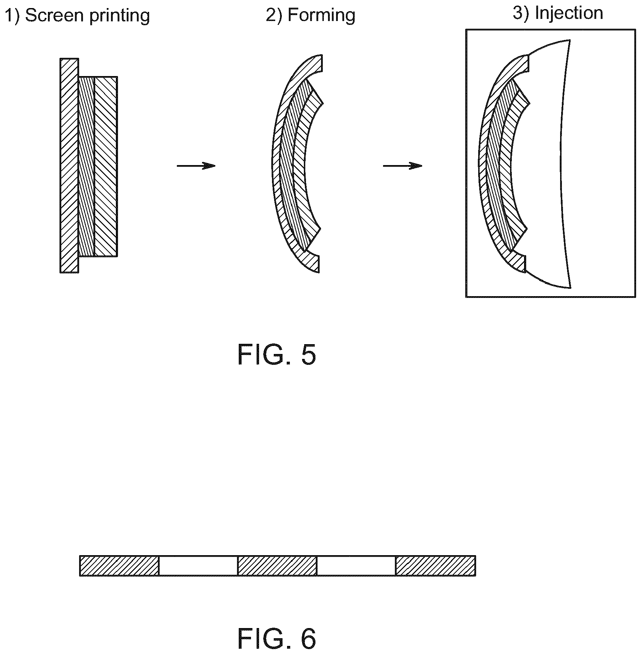

FIG. 5 is a schematic representation of the preparation of a lens-mask system not covered by the present invention. The mask 61 is formed from an ink layer, a binder layer and a resin sheet. In a second step, the prepared product is formed into the desired shape of the lens. The formed layers are subsequently injection-molded with a clear resin to form the lens-mask system.

FIG. 6 is a schematic representation of 2K molded lens-mask system not covered by the present invention with tinted parts (grey parts) and translucent parts (white parts).

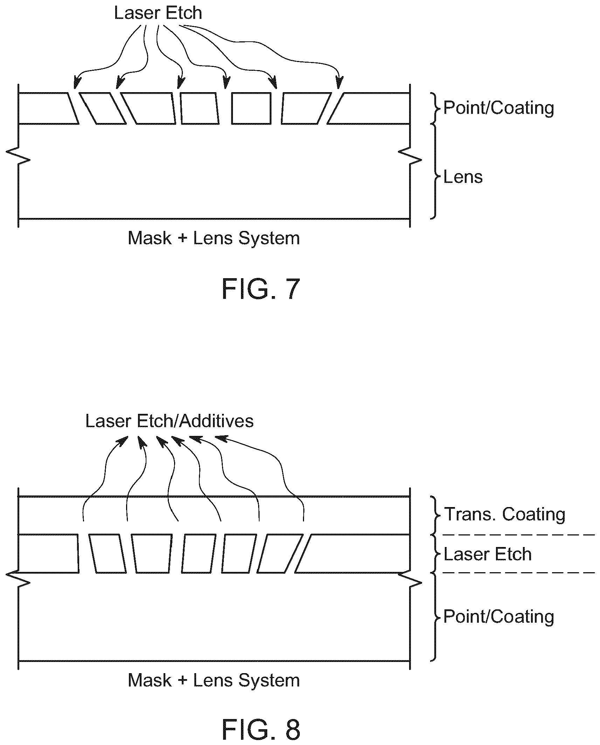

FIGS. 7 and 8 show schematic representations of embodiments not covered by the present invention.in which the mask is laser etched. Here a paint or opaque coating is applied on the lens and the desired pattern is formed afterwards by the laser etching technique. A transmissive coating (FIG. 8) is applied on the etched parts in order to provide a smooth coating for the subsequent application of the transparent and/or translucent coating.

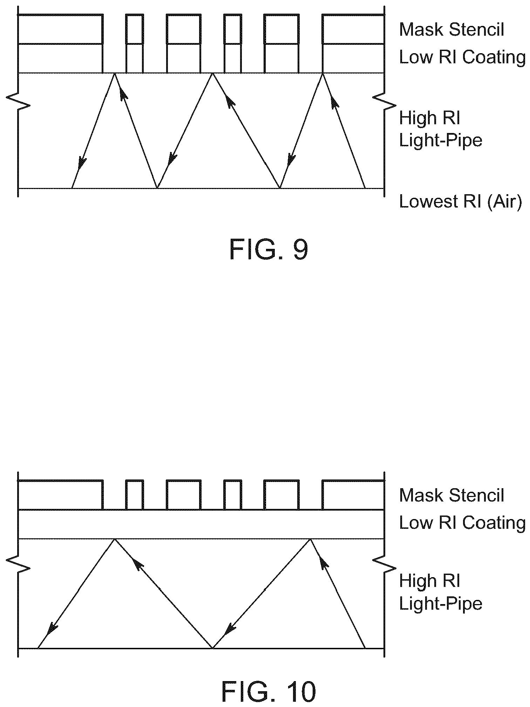

FIGS. 9 and 10 is a schematic view of the inventive system having an additional coating with a low refractive index. In FIG. 9, the additional coating has been laser etched similar to the mask, whereas in FIG. 10, the low refractive index coating is translucent and has not been etched.

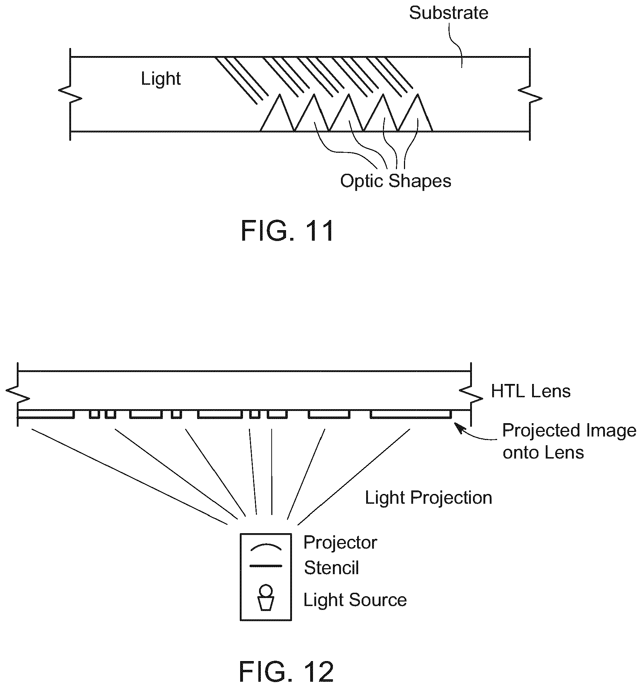

FIG. 11 is a schematic representation of an embodiment of the invention having optic shapes on the mask. The optic shapes refract light to different spectral colors thereby creating and illuminating colored pattern.

FIG. 12 is a schematic representation of an embodiment not covered by the present invention with an projector as the mask. In this embodiment the projector projects the desired image onto the inner side of the lens (60) so that it can be viewed from the outside of the lens.

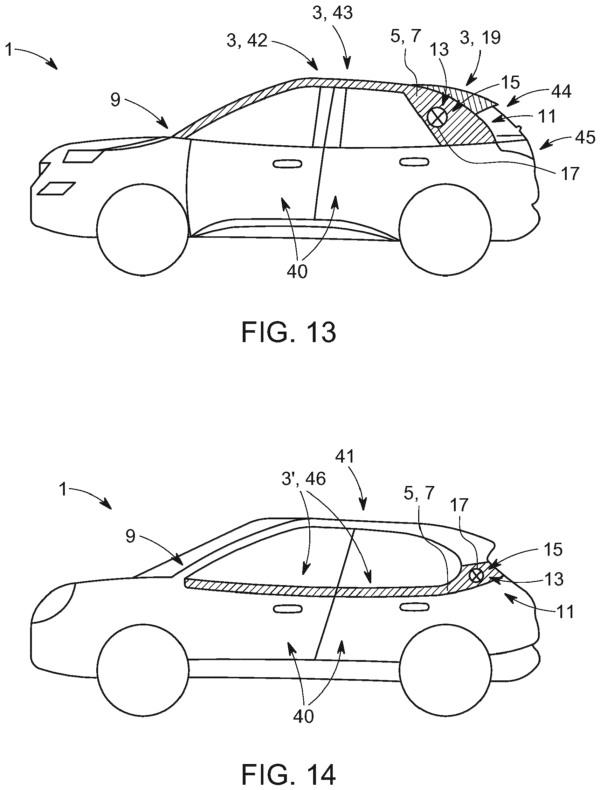

FIG. 13 shows a schematic representation of a motor vehicle 1 according to an example. This motor vehicle 1 includes the covering device 3.

The covering device 3, shown here as a one-piece covering device, includes a shaped element 5 which can be produced by a method of injection molding and simulates or represents the desired shape of the corresponding side part of the motor vehicle 1. The form element 5 is covered with a cover in the form of a chromium coating. In this case, it covers or is arranged on the entire outwardly pointing surface area of the element 5. In FIG. 1, the corresponding area is highlighted hatched. This clearly shows that the covering device 3 extends laterally and in the longitudinal direction of the motor vehicle 1 as a roof trim strip 42 above the door region 40, from a position 9 in the region of the A pillar of the motor vehicle 1 continuously to a position 11 in the region of the C. Likewise, the covering device 3 could cover a door region 40, preferably from one pillar part to the other pillar part of the same door area 40 or as a roof covering 43, at least a portion of the roof 41 of the motor vehicle 1, whereby the roof covering 43 extends from a position 9 in the region of an A-pillar of the motor vehicle 1 could extend continuously to at least one position 11 in the region of a C-pillar of the motor vehicle 1.

The covering device 3 has a light source 21 (not shown in FIG. 1) (see FIGS. 4-6) for emitting light, which is covered here in plain view from the outside by the form element 5 or lens 7. A portion of the light emitted by the light source can pass through the form element 5 and the lens 7 in at least a first region 13 of the covering device 3, which is located in the region of the C-pillar of the motor vehicle 1 to the outside. In the first region 13, the mold element 5 and the lens 7 has a passage opening 15. In the first area 13 and within the passage opening 15, a display means 17 part of the covering device 3 is arranged in the form of an emblem. The display means 17 is partially translucent configured and thus translucent from the back with light of the light source 21, which emerges visible in accordance with the translucent points to the outside.

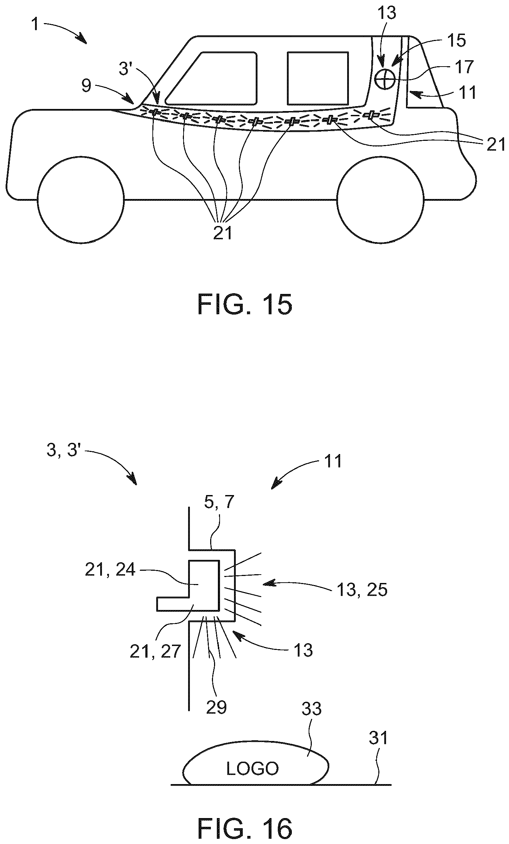

The covering device 3 has a light source 21 (not shown in FIG. 13) (see FIGS. 16-18) for emitting light, which is covered here in plain view from the outside by the form element 5 or lens 7. A portion of the light emitted by the light source can pass through the form element 5 and the lens 7 in at least a first region 13 of the covering device 3, which is located in the region of the C-pillar of the motor vehicle 1 to the outside. In the first region 13, the mold element 5 and the lens 7 has a passage opening 15. In the first region 13 and within the passage opening 15, a display means 17 part of the covering device 3 is arranged in the form of an emblem. The display means 17 is partially translucent configured and thus translucent from the back with light of the light source 21, which emerges visible in accordance with the translucent points to the outside.

In a further embodiment not shown in FIG. 13, in a first region 13 of the covering device 3, the light from a light source 21 encompassed by the covering device 3 can be seen in a first region 13 of the covering device 3, which is present both in the form element 5 and in the lens 7 is designed translucent, escape and thus cause a flat luminous impression.

Fig. 14 shows a schematic representation of a motor vehicle 1 according to the invention according to the third aspect of the invention, a further embodiment. The elements and the mode of operation of the multi-part covering device 3' according to the invention largely correspond to the elements and functionalities shown in FIG. 13, with the individual parts of the multi-part covering device 3' being arranged on the two doors 40 as mutually movable regions of the motor vehicle 1. In order that both doors can be opened separately from one another, the part of the covering device 3 'on the front door 40 is designed separately from the other part on the rear door 40. On the roof 41 no covering device is arranged. Of course, the embodiments of Figures 1 and 2 can be combined with each other.

As can be seen from FIG. 14, the embodiment of the covering device 3' differs from the covering device 3 of FIG. 13 in terms of its physical shape. Thus, the covering device 3' does not extend laterally above the windows of the motor vehicle 1 as a door shaft strip 46. The position of the display means 17 is different. This emphasizes the high freedom of design, which is made possible by the covering devices 3, 3' according to the invention.

FIG. 15 shows a schematic representation of a motor vehicle 1 according to the invention in a further embodiment. This has a multi-part covering device 3' according to the invention, the elements and functions of which correspond to the embodiments of FIGS. 13 and 14 as far as possible.

For reasons of clarity, neither the shaped element 5 nor the lens 7 of the covering device 3' is shown in detail in FIG. 15. For this, the seven light sources 21 can be seen. Each of the light sources 21 is distributed to different positions behind the mold element 5 and the lens 7. The mold element 5 and the lens 7 are each translucent in this area. As a result, a planar lighting effect along the entire side surface of the motor vehicle 1 is achieved. For this purpose, furthermore, light guides (not explicitly shown in FIG. 15) covered by the covering device 3' are used. These also direct the light from the individual light sources 21 to other locations within the respective first region, whereby the illumination effect is more uniform. The light sources 21 preferably include light-emitting diodes. A further light source, which is not recognizable in FIG. 3, is arranged behind the display means 17.

FIG. 16 not claimed by the present invention shows a schematic cross-sectional illustration in a further embodiment of a covering device 3, 3 'according to the invention.

The cross section is in the lateral section through the position 11 of the cover 3, 3' in the region of the C-pillar. As can further be seen from FIG. 16, the covering device 3, 3' has two light sources 21. Namely on the one hand a light emitting diode as a display device 24, the light passes in the emission direction 25 in a first translucent region 13 through the mold element 5 and the lens 7. On the other hand, a projection device 27, the light of which passes in the emission direction 29 in another first region 13 through a passage opening in the mold element 5 and in the lens 7 there through. In this case, a logo 33 is projected onto the ground 31 by the projection device 27 on a surface 31 of the floor below the covering device 3, 3'.

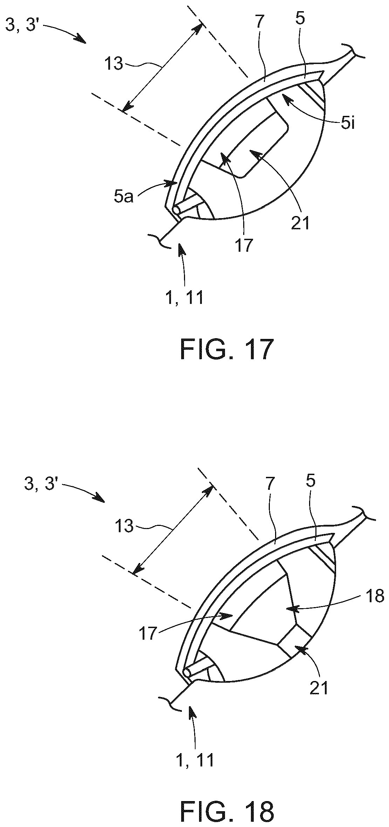

FIG. 17 not claimed by the present invention shows a schematic representation of an embodiment of the covering device 3,3' in the lateral section, from which the layers of the form element 5 and lens 7 emerge in a particularly clear manner. Here, the mold element 5 forms a cavity to the outside of the motor vehicle 1, in which the light source 21 is received. The lens 7 is arranged on the outside 5a of the element (5) in order to cover it to the outside. On the inside 5i of the form element is a display means 17, preferably at least one emblem disposed. Here, the display means 17 is at least partially translucent, in particular transparent, configured and arranged in the first region 13, wherein at least part of the light emitted by the light source 21 passes through the mold element 5 and/or the lens 7 after can pass outside. The light source 21 is here connected via the display means 17 with the inner side 5i of the form element 5 wherein the first region 13 covers the light source 21. In this embodiment, the light source 21 may be a planar arrangement of a plurality of LEDs or a planar OLED. The lens 7 includes at least one metal coating, which is preferably produced and/or producible by means of thin-film technology. The metal coating may include a chromium-containing layer, preferably the chromium-containing layer is a chromium alloy or a doped chromium layer. The lens 7 covers the display means 17 from.

FIG. 18 shows a further embodiment of the covering device not covered by the present invention in a lateral section. In contrast to FIG. 17, here the light source 21 is not arranged on the display means 17. Here, the covering device 3, 3' further includes a light guide 18 which distributes the light emitted by the light source 21 to the first area 13 by extending from the light source 21 to the display means 17. The light source 21 is embodied here as an LED or as a linear chain of LEDs. In other embodiments, the covering device 3, 3' could also include a plurality of optical fibers 18 and a plurality of first regions (13), wherein at least a first of the optical fibers 18 distributes light to at least one of the first regions 13 and at least a second of the optical fibers 18 emits light distributed at least one other first area 13. For the other components, reference is made to the description of FIG. 17.

It will be appreciated by those skilled in the art that changes could be made to the embodiments described above without departing from the broad inventive concept thereof. It is understood, therefore, that the invention disclosed herein is not limited to the particular embodiments disclosed, and is intended to cover modifications within the scope of the present invention.

## Claims

1. A light emitting system (50) for a motor vehicle (1), comprising:
at least one light pipe (18, 63);
at least one light source (21, 27, 64) disposed at least partially within an interior of the system;
at least one mask (61) providing a desired pattern of illumination of the system, wherein the mask comprises faded marks which are suited to intentionally create brighter or duller areas obtaining a selective brightness to control illumination levels by both the light source and the mask; and
a lens (7, 60) substantially enclosing the interior of the system (50), the at least one light pipe (18, 63), and the at least one light source (21, 27, 64), the lens (7, 60) having an inner surface, an outer surface disposed opposite the inner surface and at least one of a continuous transparent or translucent coating on the outer surface, the mask (61) being in direct contact to the coated lens (7, 60),
wherein the at least one light source (21, 27, 64) is configured to emit light by or based on at least receiving electrical power from an electrical power source, the at least one light source (21, 27, 64) being arranged adjacent to and directed towards the at least one light pipe (18, 63), with the at least one light source (21, 27, 64) receiving electrical power from the electrical power source, the at least one of the continuous transparent or translucent coating is at least partially permeable to at least some light which is emitted by the at least one light source (21, 27, 64) and passed through the lens (7, 60), and
wherein the mask (61) and the lens (7, 60) are separable.

2. The system of claim 1, wherein
the at least one light pipe (18, 63) or the lens (7, 60) comprises optic shapes that refract light to different colors, wherein the optic shapes are selected from at least one of micro lenses, prisms, or light refracting free form shapes.

3. The system of claim 1 or 2, further comprising
at least one gasket (62) between the at least one mask (61) and the at least one light pipe (63), wherein the at least one gasket (62) is configured to be permanently fixed to the at least one mask (61).

4. The system of any one of the preceding claims, wherein
the at least one of the transparent or translucent coating is a metal coating, wherein the metal coating comprises chromium or is a chromium-based reflecting coating.

5. The system of any one of the preceding claims, wherein
the mask (61) comprises an at least partially translucent image thereon, and
the mask (61) stretches along the entire lens (7, 60).

6. The system of any one of the preceding claims, wherein
(i) the mask is formed by molding an opaque material partly onto a clear material by a 2K molding process, with a window of clear material in at least one region of the mask being formed, and/or
(ii) the faded marks are formed by etch, tint, pigments, additives or a combination thereof.

7. The system of any one of the preceding claims, wherein
the lens comprises an additional coating selected from at least one of a paint, an opaque material, a tint.

8. The system of any one of the preceding claims, wherein
the at least one light pipe is formed from a material having a refractive index, and the at least one light pipe comprises a coating with a material having a refractive index lower than that of the light pipe.

9. The system of any one of the preceding claims, wherein
the at least one of the transparent or translucent coating comprises same gaps or marks as given by the mask as the pattern of illumination.

10. The system of any one of the preceding claims, wherein
(i) the at least one light source (21, 64) comprises at least one of an incandescent light source, one or more light emitting diodes LED's, one or more organic light-emitting diodes, a combination thereof, wherein the at least one light source is located on a circuit board, or
(ii) the at least one light source (27) is a logo lamp or projector which functions as the mask.

11. A vehicle design element comprising the light emitting system of any one of the preceding claims.

12. Arear view device of a vehicle comprising the light emitting system of any one of claims 1 to 10.

13. A covering device (3, 3', 42, 43, 46) for arranging on at least one outer area of a motor vehicle (1), comprising
the light emitting system (50) of any one of claims 1 to 10 comprising
said at least one light pipe (18, 63);
said at least one light source (21, 27, 64) disposed at least partially within an interior of the system;
said at least one mask (61) providing a desired pattern of illumination of the system, wherein the mask comprises faded marks which are suited to intentionally create brighter or duller areas obtaining a selective brightness to control illumination levels by both the light source and the mask;
a gasket (62) located between the mask (61) and the light pipe (18, 63); and
said lens (7, 60) substantially enclosing the interior of the system (50), the at least one light pipe (18, 63), and the at least one light source (21, 27, 64), the lens (7, 60) having an inner surface, an outer surface disposed opposite the inner surface and at least one of a continuous transparent or translucent coating on the outer surface, the mask (61) being in direct contact to the coated lens (7, 60),
wherein the at least one light source (21, 27, 64) is configured to emit light by or based on at least receiving electrical power from an electrical power source, the at least one light source (21, 27, 64) being arranged adjacent to and directed towards the at least one light pipe (18, 63), with the at least one light source (21, 27, 64) receiving electrical power from the electrical power source, the at least one of the continuous transparent or translucent coating is at least partially permeable to at least some light which is emitted by the at least one light source (21, 27, 64) and passed through the lens (7, 60), and
wherein the mask (61) and the lens (7, 60) are separable; and
at least one form element (5) produced by injection molding with an inner side (5i) facing the motor vehicle (1) and an outer side (5a) pointing away from the motor vehicle (1);
wherein the lens (7) at least partially covers the outer side (5a) of the form element (5),
the light source (21) is arranged on the inner side (5i) of the form element (5) or at least connected with the inner side (5i), and the form element (5) covers the light source (21), and
at least a portion of the light emitted by the light source (21) is configured to pass through the form element (5) and the lens (7) outwardly in at least a first region (13) of the covering device (3, 3'), wherein the form element (5) is translucent at least in the first region (13) and the lens (7) is translucent at least in the first region (13) or has a passage opening.

14. The covering device of claim 13, wherein
the light source (21) is configured to display different colors as a multicolor light source.

15. The covering device of any one of the claims 13 or 14, further comprising
at least one display means (17, 24) or at least one emblem,
wherein preferably the display means (17, 24) is at least partially translucent or transparent, and is disposed at least partially in the first region (13), and/or.
wherein preferably the lens (7) at least partially covers the display means (17, 24).

16. The covering device of any one of the claims 13 to 15, wherein
the form element (5) forms at least one projection or cavity for receiving the light source (21).

17. The covering device of any one of the claims 13 to 16, wherein
the light source (21) comprises at least one projection device for projecting at least one of an information or a logo as a lighting device, a floor lamp, or a puddle lamp illuminating at least one surface or at least one region of a ground, and/or
the light source (21) is configured to at least one of
• display different colors as a multicolor light source,
• play or display several images, and
• display user-related advertisements conveyed by key-specific information.

18. The covering device of any one of the claims 13 to 17, further comprising a plurality of the light pipes and a plurality of first regions, wherein at least a first of the plurality of light pipes distributes light to at least one of the plurality of first regions and at least a second of the plurality of light pipes distributes light to at least another of the plurality of first regions.

19. A motor vehicle (1) comprising the covering device (3, 3', 42, 43, 46) of any one of the claims 13 to 18.

20. The motor vehicle of claim 19, wherein
the covering device is arranged as a one-piece covering device or as a multi-part covering device comprising several separate parts on the motor vehicle, and individual parts are arranged on mutually movable areas of the motor vehicle,
(i) wherein preferably the one-piece covering device covers a door region from one pillar part to another pillar part of the door region or above the door region as a roof trim strip or as a roof covering that covers at least a portion of the roof of the motor vehicle, and the roof cover or the roof trim strip extends from a position in a region of an A-pillar of the motor vehicle continuously to at least one position in a region of a C-pillar of the motor vehicle, or
(ii) wherein preferably the one-piece covering device is arranged as a spoiler in a roof area, in a region of a rear window, or in a region of a vehicle rear, and the spoiler extends from one side of the motor vehicle to another side of the motor vehicle, wherein preferably the one-piece covering device extends laterally on the motor vehicle over different door regions from a position in a region of the A-pillar to a position in an area of the C-pillar, or
(iii) wherein preferably the multi-part covering device is arranged as a door shaft strip.

## Patentansprüche

1. Lichtemittierendes System (50) für ein Kraftfahrzeug (1), umfassend:
wenigstens einen Lichtleiter (18, 63);
wenigstens eine Lichtquelle (21, 27, 64), die wenigstens teilweise in einem Inneren des Systems angeordnet ist;
wenigstens eine Maske (61), die ein gewünschtes Beleuchtungsmuster des Systems bereitstellt, wobei die Maske verblasste Markierungen umfasst, die dazu geeignet sind, gezielt hellere oder weniger helle Bereiche zu erzeugen und so eine selektive Helligkeit zu erhalten, um die Beleuchtungsniveaus sowohl über die Lichtquelle als auch über die Maske zu steuern; und
eine Linse (7, 60), die im Wesentlichen das Innere des Systems (50), den wenigstens einen Lichtleiter (18, 63) und die wenigstens eine Lichtquelle (21, 27, 64) umschließt, wobei die Linse (7, 60) eine Innenfläche, eine Außenfläche, die gegenüber der Innenfläche angeordnet ist, und eine durchgehende transparente und/oder transluzente Beschichtung auf der Außenfläche aufweist, wobei die Maske (61) in direktem Kontakt mit der beschichteten Linse (7, 60) steht,
wobei die wenigstens eine Lichtquelle (21, 27, 64) dazu ausgestaltet ist, Licht durch oder basierend auf wenigstens das/dem Empfangen elektrischer Leistung von einer Quelle elektrischer Leistung zu emittieren, wobei die wenigstens eine Lichtquelle (21, 27, 64) dem wenigstens einen Lichtleiter (18, 63) benachbart und zu diesem hin gerichtet angeordnet ist und, wenn die wenigstens eine Lichtquelle (21, 27, 64) elektrische Leistung von der Quelle elektrischer Leistung empfängt, die durchgehende transparente und/oder transluzente Beschichtung für wenigstens etwas Licht, das durch die wenigstens eine Lichtquelle (21, 27, 64) emittiert wird und durch die Linse (7, 60) hindurchtritt, durchlässig ist, und
wobei die Maske (61) und die Linse (7, 60) trennbar sind.

2. System nach Anspruch 1, wobei
der wenigstens eine Lichtleiter (18, 63) oder die Linse (7, 60) optische Formen umfasst, die Licht in verschiedene Farben brechen, wobei die optischen Formen aus Mikrolinsen, Prismen und/oder lichtbrechenden Formen mit freier Geometrie ausgewählt sind.

3. System nach Anspruch 1 oder 2, ferner umfassend:
wenigstens eine Dichtung (62) zwischen der wenigstens einen Maske (61) und dem wenigstens einen Lichtleiter (63), wobei die wenigstens eine Dichtung (62) dazu ausgestaltet ist, dauerhaft an der wenigstens einen Maske (61) befestigt zu sein.

4. System nach einem der vorangehenden Ansprüche, wobei
die transparente und/oder transluzente Beschichtung eine Metallbeschichtung ist, wobei die Metallbeschichtung Chrom umfasst oder eine reflektierende Beschichtung auf Chrombasis ist.

5. System nach einem der vorangehenden Ansprüche, wobei
die Maske (61) ein wenigstens teilweise transluzentes Bild darauf umfasst und die Maske (61) sich entlang der gesamten Linse (7, 60) erstreckt.

6. System nach einem der vorangehenden Ansprüche, wobei
(i) die Maske durch teilweises Überformen eines klaren Materials mit einem opaken Material mittels eines 2K-Formungsprozesses ausgebildet wird, wobei in wenigstens einem Bereich der Maske ein Fenster aus klarem Material ausgebildet wird, und/oder
(ii) die verblassten Markierungen durch ein Ätzmittel, einer Tönung, Pigmente, Additive oder eine Kombination davon ausgebildet werden.

7. System nach einem der vorangehenden Ansprüche, wobei
die Linse eine zusätzliche Beschichtung umfasst, die aus einem Anstrich, einem opaken Material und/oder einer Tönung ausgewählt ist.

8. System nach einem der vorangehenden Ansprüche, wobei
der wenigstens eine Lichtleiter aus einem Material ausgebildet ist, das einen Brechungsindex aufweist, und der wenigstens eine Lichtleiter eine Beschichtung mit einem Material umfasst, das einen Brechungsindex aufweist, der niedriger als derjenige des Lichtleiters ist.

9. System nach einem der vorangehenden Ansprüche, wobei
die transparente und/oder transluzente Beschichtung die gleichen Leerstellen oder Markierungen umfasst, wie sie durch die Maske als das Beleuchtungsmuster vorgegeben sind.

10. System nach einem der vorangehenden Ansprüche, wobei
(i) die wenigstens eine Lichtquelle (21, 64) eine Glühlichtquelle, eine oder mehrere lichtemittierende Dioden LEDs, eine oder mehrere organische lichtemittierende Dioden und/oder eine Kombination davon umfasst, wobei die wenigstens eine Lichtquelle sich auf einer Leiterplatte befindet, oder
(ii) die wenigstens eine Lichtquelle (27) ein(e) Logo-Lampe oder -Projektor ist, die/der als die Maske fungiert.

11. Fahrzeugdesignelement, welches das lichtemittierende System nach einem der vorangehenden Ansprüche umfasst.

12. Rückblickvorrichtung eines Fahrzeugs, welches das lichtemittierende System nach einem der Ansprüche 1 bis 10 umfasst.

13. Abdeckvorrichtung (3, 3', 42, 43, 46) zum Anordnen auf wenigstens einem äußeren Bereich eines Kraftfahrzeugs (1), umfassend:
das lichtemittierende System (50) nach einem der Ansprüche 1 bis 10, umfassend:
den wenigstens einen Lichtleiter (18, 63);
die wenigstens eine Lichtquelle (21, 27, 64), die wenigstens teilweise in einem Inneren des Systems angeordnet ist;
die wenigstens eine Maske (61), die ein gewünschtes Beleuchtungsmuster des Systems bereitstellt, wobei die Maske verblasste Markierungen umfasst, die dazu geeignet sind, gezielt hellere oder weniger helle Bereiche zu erzeugen und so eine selektive Helligkeit zu erhalten, um die Beleuchtungsniveaus sowohl über die Lichtquelle als auch über die Maske zu steuern;
eine Dichtung (62), die sich zwischen der Maske (61) und dem Lichtleiter (18, 63) befindet; und
die Linse (7, 60), die im Wesentlichen das Innere des Systems (50), den wenigstens einen Lichtleiter (18, 63) und die wenigstens eine Lichtquelle (21, 27, 64) umschließt, wobei die Linse (7, 60) eine Innenfläche, eine Außenfläche, die gegenüber der Innenfläche angeordnet ist, und eine durchgehende transparente und/oder transluzente Beschichtung auf der Außenfläche aufweist, wobei die Maske (61) in direktem Kontakt mit der beschichteten Linse (7, 60) steht,
wobei die wenigstens eine Lichtquelle (21, 27, 64) dazu ausgestaltet ist, Licht durch oder basierend auf wenigstens das/dem Empfangen elektrischer Leistung von einer Quelle elektrischer Leistung zu emittieren, wobei die wenigstens eine Lichtquelle (21, 27, 64) dem wenigstens einen Lichtleiter (18, 63) benachbart und zu diesem hin gerichtet angeordnet ist und, wenn die wenigstens eine Lichtquelle (21, 27, 64) elektrische Leistung von der Quelle elektrischer Leistung empfängt, die durchgehende transparente und/oder transluzente Beschichtung für wenigstens etwas Licht, das durch die wenigstens eine Lichtquelle (21, 27, 64) emittiert wird und durch die Linse (7, 60) hindurchtritt, durchlässig ist, und
wobei die Maske (61) und die Linse (7, 60) trennbar sind; und
wenigstens ein durch Spritzgießen hergestelltes Formelement (5) mit einer Innenseite (5i), die dem Kraftfahrzeug (1) zugewandt ist, und einer Außenseite (5a), die von dem Kraftfahrzeug (1) weg weist;
wobei die Linse (7) die Außenseite (5a) des Formelements (5) wenigstens teilweise abdeckt, die Lichtquelle (21) auf der Innenseite (5i) des Formelements (5) angeordnet oder wenigstens mit der Innenseite (5i) verbunden ist und das Formelement (5) die Lichtquelle (21) abdeckt und wenigstens ein Teil des Lichts, das durch die Lichtquelle (21) emittiert wird, dazu ausgestaltet ist, in wenigstens einem ersten Bereich (13) der Abdeckvorrichtung (3, 3') durch das Formelement (5) und die Linse (7) nach außen hindurchzutreten, wobei das Formelement (5) wenigstens in dem ersten Bereich (13) transluzent ist und die Linse (7) wenigstens in dem ersten Bereich (13) transluzent ist oder eine Durchtrittsöffnung aufweist.

14. Abdeckvorrichtung nach Anspruch 13, wobei
die Lichtquelle (21) dazu ausgestaltet ist, als eine Mehrfarben-Lichtquelle verschiedene Farben anzuzeigen.

15. Abdeckvorrichtung nach einem der Ansprüche 13 oder 14, ferner umfassend:
wenigstens ein Anzeigemittel (17, 24) oder wenigstens ein Emblem,
wobei vorzugsweise das Anzeigemittel (17, 24) wenigstens teilweise transparent oder
transluzent ist und wenigstens teilweise in dem ersten Bereich (13) angeordnet ist und/oder wobei vorzugsweise die Linse (7) das Anzeigemittel (17, 24) wenigstens teilweise abdeckt.

16. Abdeckvorrichtung nach einem der Ansprüche 13 bis 15, wobei das Formelement (5) wenigstens einen Vorsprung oder Kavität zum Aufnehmen der Lichtquelle (21) ausbildet.

17. Abdeckvorrichtung nach einem der Ansprüche 13 bis 16, wobei die Lichtquelle (21) wenigstens eine Projektionsvorrichtung zum Projizieren einer Information und/oder eines Logos als eine Leuchtvorrichtung, eine Bodenleuchte oder eine Umfeldleuchte, die wenigstens eine Oberfläche oder wenigstens einen Bereich eines Bodens beleuchtet, umfasst und/oder
die Lichtquelle (21) für Folgendes ausgestaltet ist:
• Anzeigen verschiedener Farben als eine Mehrfarben-Lichtquelle,
• Abspielen oder Anzeigen mehrerer Bilder und/oder
• Anzeigen benutzerbezogener Werbung, die durch schlüssel spezifische Informationen übermittelt wird.

18. Abdeckvorrichtung nach einem der Ansprüche 13 bis 17, ferner umfassend:
eine Mehrzahl der Lichtleiter und eine Mehrzahl erster Bereiche, wobei wenigstens ein erster aus der Mehrzahl von Lichtleitern Licht zu wenigstens einem aus der Mehrzahl erster Bereiche verteilt und wenigstens ein zweiter aus der Mehrzahl von Lichtleitern Licht zu wenigstens einem anderen aus der Mehrzahl erster Bereiche verteilt.

19. Kraftfahrzeug (1), das die Abdeckvorrichtung (3, 3', 42, 43, 46) nach einem der Ansprüche 13 bis 18 umfasst.

20. Kraftfahrzeug nach Anspruch 19, wobei
die Abdeckvorrichtung als eine einteilige Abdeckvorrichtung oder als eine mehrteilige Abdeckvorrichtung, die mehrere separate Teile umfasst, an dem Kraftfahrzeug angeordnet ist und einzelne Teile an bezogen aufeinander bewegbaren Bereichen des Kraftfahrzeugs angeordnet sind,
(i) wobei vorzugsweise die einteilige Abdeckvorrichtung einen Türbereich abdeckt, und zwar von einem Säulenteil zu einem anderen Säulenteil des Türbereichs oder über dem Türbereich als eine Dachzierleiste oder als eine Dachabdeckung, die wenigstens einen Teil des Dachs des Kraftfahrzeugs abdeckt, und die Dachabdeckung oder die Dachzierleiste sich von einer Stelle in einem Bereich einer A-Säule des Kraftfahrzeugs durchgehend zu wenigstens einer Stelle in einem Bereich einer C-Säule des Kraftfahrzeugs erstreckt oder
(ii) wobei vorzugsweise die einteilige Abdeckvorrichtung als ein Spoiler in einem Dachbereich, in einem Bereich eines Heckfensters oder in einem Bereich eines Fahrzeughecks angeordnet ist und der Spoiler sich von einer Seite des Kraftfahrzeugs zu einer anderen Seite des Kraftfahrzeugs erstreckt, wobei vorzugsweise die einteilige Abdeckvorrichtung sich seitlich an dem Kraftfahrzeug über verschiedene Türbereiche von einer Stelle in einem Bereich der A-Säule zu einer Stelle in einem Bereich der C-Säule erstreckt, oder
(iii) wobei vorzugsweise die mehrteilige Abdeckvorrichtung als eine Türwellenleiste angeordnet ist.

## Revendications

1. Système émetteur de lumière (50) destiné à un véhicule à moteur (1), comprenant :
au moins un conduit de lumière (18, 63) ;
au moins une source de lumière (21, 27, 64) disposée au moins en partie à l'intérieur du système ;
au moins un masque (61) fournissant un motif d'éclairage souhaité du système, le masque comprenant des marquages estompés appropriés pour créer intentionnellement des zones plus lumineuses ou plus ternes obtenant une luminosité sélective pour commander des niveaux d'éclairage par la source de lumière et par le masque ; et
une lentille (7, 60) entourant essentiellement l'intérieur du système (50), l'au moins un conduit de lumière (18, 63) et l'au moins une source de lumière (21, 27, 64), la lentille (7, 60) présentant une surface intérieure, une surface extérieure disposée à l'opposé de la surface intérieure et un revêtement transparent et/ou translucide continu sur la surface extérieure, le masque (61) étant en contact direct avec la lentille (7, 60) dotée du revêtement,
l'au moins une source de lumière (21, 27, 64) étant conçue pour émettre de la lumière au moyen de ou en fonction de au moins la réception d'énergie électrique provenant d'une source d'énergie électrique, l'au moins une source de lumière (21, 27, 64) étant agencée adjacente à l'au moins un conduit de lumière (18, 63) et dirigée vers celui-ci, l'au moins une source de lumière (21, 27, 64) recevant de l'énergie électrique provenant de la source d'énergie électrique, le revêtement transparent et/ou translucide continu étant au moins en partie perméable à au moins une certaine lumière qui est émise par l'au moins une source de lumière (21, 27, 64) et qui traverse la lentille (7, 60), et
le masque (61) et la lentille (7, 60) étant séparables.

2. Système selon la revendication 1, dans lequel
l'au moins un conduit de lumière (18, 63) ou la lentille (7, 60) comprend des formes optiques qui réfractent la lumière en différentes couleurs, les formes optiques étant sélectionnées parmi des microlentilles, des prismes et/ou des formes libres de réfraction de la lumière.

3. Système selon la revendication 1 ou 2, comprenant en outre
au moins un joint (62) entre l'au moins un masque (61) et l'au moins un conduit de lumière (63),
l'au moins un joint (62) étant conçu pour être fixé à demeure sur l'au moins un masque (61).

4. Système selon l'une quelconque des revendications précédentes, dans lequel le revêtement transparent et/ou translucide est un revêtement métallique, le revêtement métallique comprenant du chrome ou étant un revêtement réfléchissant à base de chrome.

5. Système selon l'une quelconque des revendications précédentes, dans lequel
le masque (61) comprend une image au moins en partie translucide située sur celui-ci, et
le masque (61) s'étend le long de toute la lentille (7, 60).

6. Système selon l'une quelconque des revendications précédentes, dans lequel
(i) le masque est formé en moulant un matériau opaque en partie sur un matériau clair par un processus de moulage 2K, avec formation d'une fenêtre de matériau clair dans au moins une région du masque, et/ou
(ii) les marquages estompés sont formés par gravure, teinte, pigments, additifs ou une combinaison de ceux-ci.

7. Système selon l'une quelconque des revendications précédentes, dans lequel la lentille comprend un revêtement supplémentaire sélectionné parmi une peinture, un matériau opaque et/ou une teinte.

8. Système selon l'une quelconque des revendications précédentes, dans lequel l'au moins un conduit de lumière est formé à partir d'un matériau présentant un indice de réfraction et l'au moins un conduit de lumière comprend un revêtement avec un matériau présentant un indice de réfraction inférieur à celui du conduit de lumière.

9. Système selon l'une quelconque des revendications précédentes, dans lequel le revêtement transparent et/ou translucide comprend les mêmes lacunes ou marquages que ceux fournis par le masque comme motif d'éclairage.

10. Système selon l'une quelconque des revendications précédentes, dans lequel
(i) l'au moins une source de lumière (21, 64) comprend une source de lumière incandescente, une ou plusieurs diodes électroluminescentes DEL, une ou plusieurs diodes électroluminescentes organiques et/ou une combinaison de celles-ci, l'au moins une source de lumière étant située sur un circuit imprimé, ou
(ii) l'au moins une source de lumière (27) est une lampe à logo ou un projecteur qui fonctionne comme masque.

11. Élément de conception de véhicule comprenant le système émetteur de lumière selon l'une quelconque des revendications précédentes.

12. Dispositif de vision arrière d'un véhicule comprenant le système émetteur de lumière selon l'une quelconque des revendications 1 à 10.

13. Dispositif de recouvrement (3, 3', 42, 43, 46) destiné à être agencé sur au moins une zone extérieure d'un véhicule à moteur (1), comprenant :
le système émetteur de lumière (50) selon l'une quelconque des revendications 1 à 10,
comprenant :
ledit au moins un conduit de lumière (18, 63) ;
ladite au moins une source de lumière (21, 27, 64) disposée au moins en partie à l'intérieur du système ;
ledit au moins un masque (61) fournissant un motif d'éclairage souhaité du système, le masque comprenant des marquages estompés appropriés pour créer intentionnellement des zones plus lumineuses ou plus ternes obtenant une luminosité sélective pour commander des niveaux d'éclairage par la source de lumière et le masque ;
un joint (62) situé entre le masque (61) et le conduit de lumière (18, 63) ; et
ladite lentille (7, 60) entourant essentiellement l'intérieur du système (50), l'au moins un conduit de lumière (18, 63) et l'au moins une source de lumière (21, 27, 64), la lentille (7, 60) présentant une surface intérieure, une surface extérieure disposée à l'opposé de la surface intérieure et un revêtement transparent et/ou translucide continu sur la surface extérieure, le masque (61) étant en contact direct avec la lentille (7, 60) dotée du revêtement,
l'au moins une source de lumière (21, 27, 64) étant conçue pour émettre de la lumière au moyen de ou en fonction de au moins la réception d'énergie électrique provenant d'une source d'énergie électrique, l'au moins une source de lumière (21, 27, 64) étant agencée adjacente à l'au moins un conduit de lumière (18, 63) et dirigée vers celui-ci, l'au moins une source de lumière (21, 27, 64) recevant de l'énergie électrique provenant de la source d'énergie électrique, le revêtement transparent et/ou translucide continu étant au moins en partie perméable à au moins une certaine lumière qui est émise par l'au moins une source de lumière (21, 27, 64) et qui traverse la lentille (7, 60), et
le masque (61) et la lentille (7, 60) étant séparables ; et
au moins un élément de forme (5) produit par moulage par injection avec un côté intérieur (5i) faisant face au véhicule à moteur (1) et un côté extérieur (5a) dirigé dans la direction opposée au véhicule à moteur (1) ;
la lentille (7) recouvrant au moins en partie le côté extérieur (5a) de l'élément de forme (5), la source de lumière (21) étant agencée sur le côté intérieur (5i) de l'élément de forme (5) ou au moins reliée au côté intérieur (5i), et l'élément de forme (5) recouvrant la source de lumière (21), et au moins une partie de la lumière émise par la source de lumière (21) étant conçue pour traverser l'élément de forme (5) et la lentille (7) vers l'extérieur dans au moins une première région (13) du dispositif de recouvrement (3, 3'), l'élément de forme (5) étant translucide au moins dans la première région (13) et la lentille (7) étant translucide au moins dans la première région (13) ou présentant une ouverture de passage.

14. Dispositif de recouvrement selon la revendication 13, dans lequel
la source de lumière (21) est conçue pour arborer différentes couleurs en tant que source de lumière multicolore.

15. Dispositif de recouvrement selon l'une des revendications 13 ou 14, comprenant en outre au moins un moyen d'affichage (17, 24) ou au moins un emblème,
dans lequel le moyen d'affichage (17, 24) est de préférence au moins en partie translucide ou transparent et est disposé au moins en partie dans la première région (13), et/ou
dans lequel la lentille (7) recouvre de préférence en partie le moyen d'affichage (17, 24).

16. Dispositif de recouvrement selon l'une quelconque des revendications 13 à 15, dans lequel
l'élément de forme (5) forme au moins une saillie ou une cavité pour recevoir la source de lumière (21).

17. Dispositif de recouvrement selon l'une quelconque des revendications 13 à 16, dans lequel
la source de lumière (21) comprend au moins un dispositif de projection destiné à projeter au moins une information ou un logo en guise de dispositif d'éclairage, de lampe de plancher ou de lampe d'appoint éclairant au moins une surface ou au moins une région d'un sol, et/ou la source de lumière (21) est conçue pour
• arborer différentes couleurs en tant que source de lumière multicolore,
• passer ou afficher plusieurs images, et/ou
• afficher des publicités en rapport avec l'utilisateur transmises par des informations spécifiques de clé.

18. Dispositif de recouvrement selon l'une quelconque des revendications 13 à 17, comprenant en outre
une pluralité des conduits de lumière et une pluralité de premières régions, dans lequel au moins un premier de la pluralité de conduits de lumière distribue de la lumière à au moins une de la pluralité de premières régions et au moins un deuxième de la pluralité de conduits de lumière distribue de la lumière à une autre de la pluralité de premières régions.

19. Véhicule à moteur (1) comprenant le dispositif de recouvrement (3, 3', 42, 43, 46) selon l'une quelconque des revendications 13 à 18.

20. Véhicule à moteur selon la revendication 19, dans lequel
le dispositif de recouvrement est agencé sous la forme d'un dispositif de recouvrement d'un seul tenant ou d'un dispositif de recouvrement en plusieurs pièces comprenant plusieurs pièces séparées sur le véhicule à moteur et des pièces individuelles sont agencées sur des zones mobiles les unes par rapport aux autres du véhicule à moteur,
(i) dans lequel le dispositif de recouvrement d'un seul tenant recouvre de préférence une région de porte d'une partie de montant à une autre partie de montant de la région de porte ou au-dessus de la région de porte sous la forme d'une bande de bord de toit ou d'une couverture de toit qui recouvre au moins une partie du toit du véhicule à moteur, et la couverture de toit ou la bande de bord de toit s'étend depuis une position située dans une région d'un montant A du véhicule à moteur en continu jusqu'à au moins une position située dans une région d'un montant C du véhicule à moteur, ou
(ii) dans lequel le dispositif de recouvrement d'un seul tenant est de préférence agencé sous la forme d'un aileron dans une zone de toit, dans une région d'une fenêtre arrière ou dans une région d'un arrière de véhicule et l'aileron s'étend d'un côté du véhicule à moteur à un autre côté du véhicule à moteur, le dispositif de recouvrement d'un seul tenant s'étendant de préférence latéralement sur le véhicule à moteur sur différentes régions de porte, depuis une position située dans une région du montant A jusqu'à une position située dans une zone du montant C, ou
(iii) dans lequel le dispositif de recouvrement en plusieurs pièces est de préférence agencé sous la forme d'une bande de gaine de porte.
